# EUROPÄISCHE PATENTSCHRIFT

(11) **EP 1 853 448 B1**
(45) Veröffentlichungstag und Bekanntmachung des Hinweises auf die Patenterteilung: **07.05.2014**
(21) Anmeldenummer: 06722543.3
(22) Anmeldetag: 02.03.2006
(51) Int. Cl.: B60J 7/14

(54) **ANTRIEBSVORRICHTUNG EINES SCHWENKBAUTEILS EINES FAHRZEUGS**
DRIVING DEVICE FOR A PIVOTABLE VEHICLE COMPONENT
DISPOSITIF DE COMMANDE D'UN COMPOSANT PIVOTANT D'UN VEHICULE

(30) Priorität: 04.03.2005 DE 102005010579
(43) Veröffentlichungstag der Anmeldung: 14.11.2007
(73) Patentinhaber: Webasto SE, 82131 Stockdorf (DE)
(72) Erfinder: LANGGUTH, Martin, 82152 Krailling (DE); HERDEN, Christine, 84137 Vilsbiburg (DE); HAUSSMANN, Jochen, 82346 Andechs (DE)
(74) Vertreter: Fischer & Konnerth
(86) Internationale Anmeldenummer: PCT/DE2006/000373
(87) Internationale Veröffentlichungsnummer: WO 2006/092127

(56) Entgegenhaltungen:
- EP-A- 1 285 795
- DE-A1- 10 258 053
- US-A1- 2003 034 668
- US-B1- 6 336 673

## Beschreibung

Die Erfindung betrifft eine Antriebsvorrichtung eines Schwenkbauteils eines Fahrzeugs mit einer Antriebseinheit, die unter Zwischenschaltung eines Viergelenks mit dem Schwenkbauteil kinematisch gekoppelt ist, wobei ein zweites Viergelenk zwischen der Antriebseinheit und dem Schwenkbauteil kinematisch eingebunden ist.

Die gattungsgemäße US 2003/034668 A1 zeigt ein Cabriolet-Fahrzeug mit einem Dach, das ein vorderes Dachteil und ein hinteres Dachteil aufweist. Das Dach ist über ein karosseriefestes Hauptlager beweglich gegenüber der Fahrzeugkarosserie gehalten. Die beiden Dachteile sind über eine Gelenkkette in Wirkverbindung mit einem Antriebsorgan. Die Gelenkkette umfasst ein unteres Viergelenk, ein oberes Viergelenk und ein Synchronisationsgestänge, das die beiden Viergelenke miteinander verbindet. Die beiden Dachteile sind von dem Antriebsorgan über die Gelenkkette zwischen einer Schließstellung und einer vollständig abgelegten Stellung bei geöffnetem Dach verstellbar. Das vordere Dachteil, das somit über die beiden Viergelenke mit dem Antriebsorgan verbunden ist, ist als Schwenkbauteil ausschließlich über das obere Viergelenk an dem hinteren Dachteil gelagert. Beim Verschwenken der Dachteile beim Öffnen und Schließen des Cabrioletdaches wird die Schwenkachse des vorderen Dachteils mit dem hinteren Dachteil mit bewegt.

Aus der US-A-2 704 225 ist ein Fahrzeug mit einem Klappdach bekannt geworden, dessen Dachteile mittels einer Lenkereinrichtung am Fahrzeug bewegbar gelagert sind und zwischen einer Schließstellung über dem Fahrzeuginnenraum und einer Offenstellung, in der sie in einem heckseitigen Ablageraum abgelegt sind, verstellbar sind. Ein Hydraulikzylinder ist unmittelbar an einem an der Karosserie schwenkbar gelagerten Hauptlenker der Lenkereinrichtung angelenkt und verschwenkt diesen zum Öffnen und Schließen des Klappdaches. Bei dieser Anordnung des Hydraulikzylinders wird bei einer kontinuierlichen Kolbenbewegung des Hydraulikzylinders am Anfang und am Ende der Verstellung eine hohe Schwenkgeschwindigkeit des Hauptlenkers und im Mittelbereich der Verstellung eine niedrige Schwenkgeschwindigkeit des Hauptlenkers erzeugt. Dabei ist der Kraftbedarf des Hydraulikzylinders dementsprechend am Anfang und am Ende der Bewegung hoch und in der Mittel der Bewegung niedrig. Des weiteren ist durch die unmittelbar Ankoppelung des Hydraulikzylinders an den Hauptlenker die mögliche Positionierung des Hydraulikzylinders relativ zum Hauptlenker eingeschränkt.

In der DE 199 06 728 A1 ist eine Anordnung zur hydraulischen Betätigung eines Heckdeckels eines Fahrzeugs offenbart, bei der ein sich an der Karosserie abstützender Hydraulikzylinder ebenfalls unmittelbar an dem Heckdeckel angelenkt ist. Wenn auch der Schwenkwinkel des Heckdeckels gegenüber dem Hauptlenker des Klappdaches der voranstehend genannten Druckschrift geringer sein wird, so bestehen die oben genannten Nachteile grundsätzlich auch bei dieser Antriebsanordnung.

Aus der DE 44 35 222 C1 ist ein Fahrzeug mit einem Klappverdeck bekannt geworden, das zwischen einer einen Fahrzeugraum überdeckenden Schließposition und einer Ablageposition verstellbar ist. Ein Heckteil des Klappverdecks ist mittels eines Verdeckhebels und einer Lenkerstange an der Karosserie schwenkbar gelagert. Zum Verbessern der Antriebskinematik ist vorgesehen, daß ein Hydraulikzylinder über ein zwischengeschaltetes Viergelenk mit dem Verdeckhebel gekoppelt ist, wobei der Hydraulikzylinder an einem karosserieseitig schwenkbar gelagerten Antriebshebel angelenkt ist und dieser wiederum mittels eines Antriebslenkers mit dem Verdeckhebel gekoppelt ist.

Die DE 100 36 922 C1 offenbart eine Hauptlagereinheit für ein Cabrioverdeck, die einen Lenker des Verdeckgestänges mittels eines Zapfens schwenkbar lagert, der mit dem Lenker fest verbunden ist und einen Ritzelabschnitt aufweist, mit dem eine linear bewegbare Zahnstange in Antriebseingriff ist. Die Antriebskinematik ist an den unterschiedlichen Kraftbedarfsverlauf beim Öffnen und Schließen des Verdecks nicht angepaßt.

Der Erfindung liegt die Aufgabe zugrunde, eine eingangs genannte Antriebsvorrichtung zu schaffen, deren Kinematik hinsichtlich des Bewegungsverhaltens verbessert ist.

Die Aufgabe wird bei der eingangs genannten Antriebsvorrichtung erfindungsgemäß dadurch gelöst, dass das Schwenkbauteil mittels eines Schwenklagers an einer Karosseriestruktur schwenkbar gelagert ist.

Der insbesondere konstante Antriebskraft- und Geschwindigkeitsverlauf, der von der Antriebseinheit bereitgestellt wird, kann durch die beiden zwischengeschalteten Viergelenke bei jedem Anwendungsfall in den am Schwenkbauteil gewünschten Kraft- und Stellgeschwindigkeitsverlauf umgesetzt werden. Zu Beginn und zum Ende des Bewegungsablaufs kann auf diese Weise eine langsame Stellbewegung mit hoher Antriebskraft bereitgestellt werden, wohingegen im mittleren Bewegungsabschnitt die Stellgeschwindigkeit hoch und dabei die Antriebskraft geringer ist. Diese Eigenschaften sind für viele Drehbewegungen an Schwenkbauteilen charakteristisch.

Vorteilhafte Ausgestaltungen der Erfindung sind in den Unteransprüchen angegeben.

Zweckmäßigerweise kann das erste Viergelenk und/oder das zweite Viergelenk als Mehrgelenk mit mehr als vier Gelenken gebildet sein, um in allen Anwendungsfällen optimale Bewegungsabläufe bereitstellen zu können.

Gemäß einer bevorzugten Gestaltung enthält die kinematische Kopplung einen ersten Lenker, der an einer Karosseriestruktur schwenkbar gelagert und von der Antriebseinheit verstellbar ist, und einen zweiten Lenker, der über eine erste Koppel mit dem ersten Lenker und über eine zweite Koppel mit dem Schwenkbauteil gekoppelt ist. Die Gestaltung der Kinematik der Antriebsvorrichtung kann jedoch auch variiert werden. Die Karosseriestruktur ist z. B. ein Hauptlager oder ein sonstiges festes Karosserieteil oder ein Rahmenteil der Karosserie.

Weiterhin kann vorgesehen sein, daß in zumindest einer der beiden Bewegungsendstellungen der Antriebsvorrichtung der erste Lenker und/oder der zweite Lenker mit der angrenzenden zweiten bzw. ersten Koppel in einer Strecklage angeordnet ist bzw. sind, in der eine Schwenkbewegung des ersten bzw. zweiten Lenkers eine minimale Stellbewegung des Schwenkbauteils bei maximaler Stellkraft erzeugt.

Vorzugsweise ist in einer Bewegungszwischenstellung der Antriebsvorrichtung der erste Lenker und/oder der zweite Lenker mit der jeweils angrenzenden zweiten bzw. ersten Koppel in einer Stellung angeordnet, in der eine Bewegung der Antriebseinheit eine maximale Stellbewegung des Schwenkbauteils erzeugt.

Die Antriebseinheit enthält bevorzugt einen Hydraulikzylinder, jedoch können auch andersartige Antriebe mit insbesondere im wesentlichen linear bewegbarem Antriebsteil verwendet werden.

Gemäß einer besonders bevorzugten Gestaltung sind die beiden Vier- oder Mehrgelenke derart angeordnet und bewegbar, daß das Schwenkbauteil um mehr als 180° verschwenkbar ist. Während bei einer Antriebsvorrichtung ohne vorgeschaltetes Viergelenk die linear bewegbare Antriebseinheit bzw. der Hydraulikzylinder und der angekoppelte verschwenkbare Lenker des Viergelenks durch Strecklagen zwischen der Antriebseinheit bzw. dem Hydraulikzylinder und dem Lenker begrenzt sind und damit auch das Schwenkbauteil auf einen Schwenkwinkel von weniger als 180° eingeschränkt ist, kann bei der erfindungsgemäßen Antriebsvorrichtung durch das zweite Vier- oder Mehrgelenk ein erweiterter Schwenkbereich des Schwenkbauteils von mehr als 180° erzielt werden.

Das Schwenkbauteil kann ein Lager- oder Antriebsteil eines Falt- oder Klappdaches, einer Kofferraumklappe, eines Verdeckkastendeckels oder einer sonstigen zu bewegenden Klappe oder auch einer Türe sein.

Nachfolgend wird die Antriebsvorrichtung anhand zweier Ausführungsbeispiele unter Bezugnahme auf die Zeichnung näher erläutert. Es zeigt:
- Fig. 1: in einer Seitenansicht in schematischer Darstellung ein erstes Ausführungsbeispiel einer Antriebsvorrichtung eines Schwenkbauteils eines Fahrzeugs mit einer mit dem Schwenkbauteil über ein Zwischengetriebe gekoppelten Antriebseinrichtung in einer Ausgangsstellung;
- Fig. 2: in einer Seitenansicht in schematischer Darstellung das Schwenkbauteil in einer von der Antriebseinrichtung verschwenkten Zwischenstellung;
- Fig. 3: in einer Seitenansicht in schematischer Darstellung das Schwenkbauteil in einer von der Antriebseinrichtung weiter verschwenkten Endstellung;
- Fig. 4: in einer Seitenansicht in schematischer Darstellung ein zweites Ausführungsbeispiel der Antriebsvorrichtung eines Schwenkbauteils in einer Ausgangsstellung;
- Fig. 5: in einer Seitenansicht in schematischer Darstellung das Schwenkbauteil des zweiten Ausführungsbeispiels in einer von der Antriebseinrichtung verschwenkten ersten Zwischenstellung;
- Fig. 6: in einer Seitenansicht in schematischer Darstellung das Schwenkbauteil in einer zweiten Zwischenstellung; und
- Fig. 7: in einer Seitenansicht in schematischer Darstellung das Schwenkbauteil in einer von der Antriebseinrichtung weiter verschwenkten Endstellung.

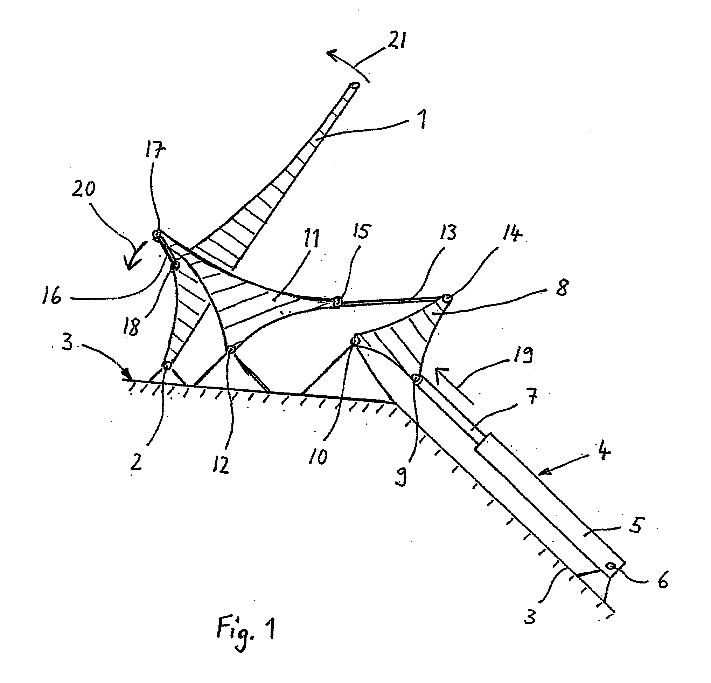

Ein Schwenkbauteil 1 eines Fahrzeugs (nicht dargestellt), z. B. eine Hauptsäule einer Verdeckkinematik eines Falt- oder Klappverdecks oder einen Schwenklagerarm eine Kofferraumklappe, ist mittels eines Schwenklagers 2 an einer Karosseriestruktur 3 schwenkbar gelagert (siehe Fig. 1 bis 3). Eine Antriebseinrichtung des Schwenkbauteils 1 enthält einen Hydraulikzylinder 4, dessen Zylindergehäuse 5 mittels eines Schwenkgelenks 6 an der Karosseriestruktur 3 gelagert ist und dessen bewegbare Kolbenstange 7 an einem ersten Lenker 8 mittels eines Gelenks 9 angelenkt ist. Der erste Lenker 8 ist mittels eines Schwenkgelenks 10 an der Karosseriestruktur 3 schwenkbar gelagert.

Zwischen dem ersten Lenker 8 und dem Schwenkbauteil 1 ist ein zweiter Lenker 11 zwischengeschaltet, der seinerseits mittels eines Schwenkgelenks 12 an der Karosseriestruktur 3 gelagert ist. Eine erste Koppel 13 verbindet den ersten Lenker 8 mit dem zweiten Lenker 11 und ist an diesen Lenkern 8 und 11 in Gelenken 14 bzw. 15 angelenkt. Eine zweite Koppel 16 verbindet den zweiten Lenker 11 mit dem Schwenkbauteil 1 und ist an diesen Bauteilen 11 und 1 in Gelenken 17 bzw. 18 angelenkt.

Zwischen dem einen Linearantrieb bildenden Hydraulikzylinder 4 und dem Schwenkbauteil 1 sind somit zwei Viergelenke zwischengeschaltet, wobei das erste Viergelenk die Gelenke 10, 14 und 12, 15 und das zweite Viergelenk die Gelenke 12, 17 und 2, 18 enthält.

In einer Ausgangsstellung des Schwenkbauteils 1 und der Antriebseinrichtung (siehe Fig. 1), z. B. zu Beginn der Öffnungsbewegung der Hauptsäule beim Ablegen des Klappdaches, stehen der zweite Lenker 11 und die zweite Koppel 16 in einer Strecklage, in der die Wirkgeraden durch die Gelenke 12 und 17 bzw. 17 und 18 in etwa parallel oder unter einem kleinen spitzen Winkel angeordnet sind. Die anfängliche Ausfahrbewegung der Kolbenstange 7 (Pfeil 19) verschwenkt den ersten Lenker 8 und über die erste Koppel 13 den zweiten Lenker 11, dessen Gelenk 17 anfänglich abwärts verschwenkt wird (Pfeil 20), wobei bei dieser Bewegung die zweite Koppel 16 zunächst im wesentlichen um das Gelenk 18 am Schwenkbauteil 1 verschwenkt wird und das Schwenkbauteil 1 in Richtung des Pfeils 21 nur geringfügig verschwenkt wird. Durch diese kinematische Auslegung wird eine anfänglich hohe Stellkraft auf das Schwenkbauteil 1 aufgebracht, während die Stellgeschwindigkeit des Schwenkbauteils 1 gering ist.

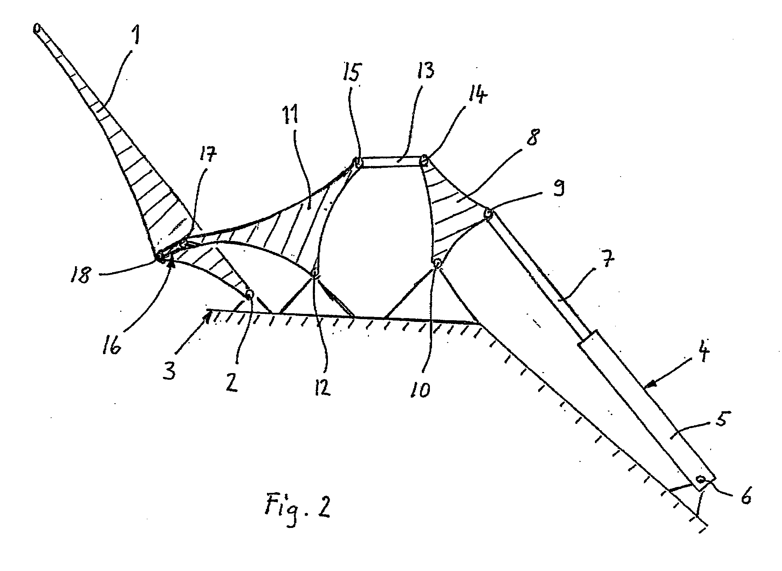

Beim weiteren Ausfahren der Kolbenstange 7 wird die in der Fig. 2 dargestellte Stellung erreicht, bei der der erste Lenker 8, die erste Koppel 13, der zweite Lenker 11 und die zweite Koppel 16 eine kinematische Kette bilden, deren Bauteile derart angeordnet sind, daß bei insbesondere konstanter Antriebsgeschwindigkeit der Kolbenstange 7 eine hohe Stell- oder Schwenkgeschwindigkeit des Schwenkbauteils 1 erzielt wird.

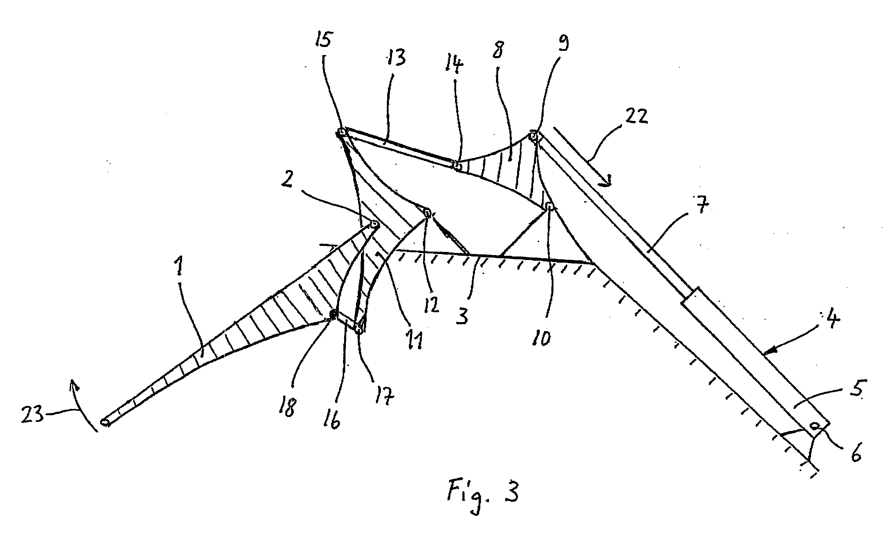

Das weitere Ausfahren der Kolbenstange 7 bringt die Antriebselemente und das Schwenkbauteil 1 in die in der Fig. 3 dargestellte Endstellung. Im Bereich dieser Stellung sind der erste Lenker 8 und die erste Koppel 13 nahezu in ihrer Strecklage. Die Antriebsbewegung des Hydraulikzylinders 4 bzw. der Kolbenstange 7 erzeugt eine vergleichsweise geringe Verstellbewegung der ersten Koppel 13 und des zweiten Lenkers 11 und damit am Schwenkbauteil 1, jedoch eine vervielfachte Stellkraft aufgrund der kinematischen Bedingungen. Diese hohe anfängliche Stellkraft bei geringer Stellgeschwindigkeit ist auch beim Schließen des Klappverdecks besonders vorteilhaft (Bewegung aus der in Fig. 3 dargestellten Stellung in Richtung der in Fig. 2 dargestellten Stellung, siehe Pfeile 22 und 23), da zunächst das Gewicht des Klappverdecks bei geringerer Geschwindigkeit aus dem Verdeckkasten angehoben werden muß, bevor das Klappverdeck mit höherer Geschwindigkeit und weniger Kraftaufwand in Schließrichtung bewegt werden kann (im Bereich der Stellung der Fig. 2).

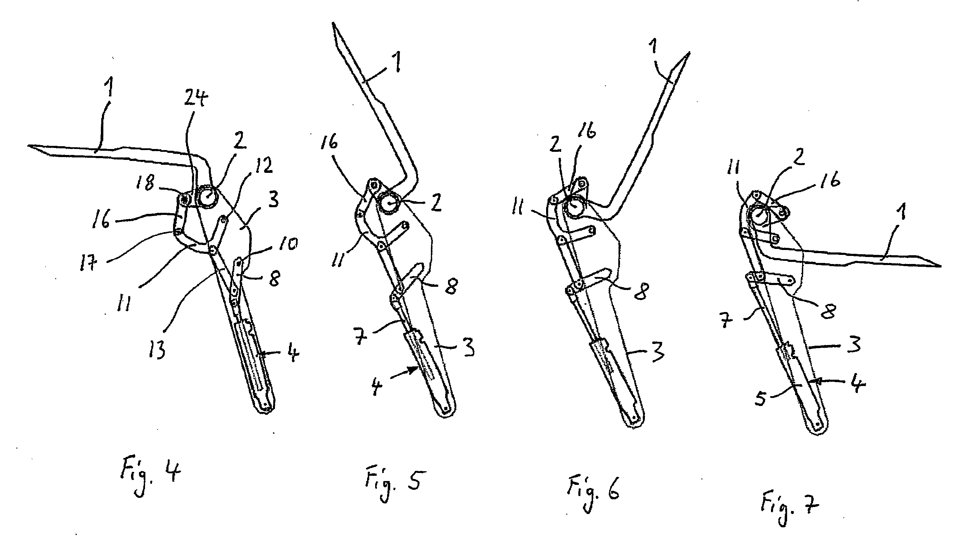

Das zweite Ausführungsbeispiel der Antriebsvorrichtung (siehe Fig. 4 bis 7) enthält die mit den gleichen Bezugszeichen versehenen Bauteile des ersten Ausführungsbeispiel in ähnlicher Gestalt und Anordnung. Das Schwenkbauteil 1 ist mittels des Schwenklagers 2, z. B. eine Lagerachse, an der Karosseriestruktur 3 schwenkbar gelagert. Die Karosseriestruktur 3 kann auch ein Lagerbauteil sein, das an der Karosseriestruktur befestigt ist. Ein mit dem Schwenkbauteil 1 drehfest verbundener oder auch einstückig gebildeter Arm 24 enthält das Gelenk 18 zur Kopplung mit der zweiten Koppel 16. Der zweite Lenker 11 ist derart gekrümmt gebildet, daß er sich in der Endstellung gemäß Fig. 7 um den Lagerzapfen bzw. das Schwenklager 2 legt. Der dargestellte Schwenkwinkel des Schwenkbauteils 1 von etwa 180° kann durch Anpassen der Bauteile der Antriebsvorrichtung auf deutlich über 180° erhöht werden.

Die dargestellte Antriebsvorrichtung kann in einfacher oder in zweifacher paralleler Ausführung zum Antreiben eines Schwenkbauteils oder zweier paralleler Schwenkbauteile vorgesehen sein.

**Bezugszeichenliste**

| | | | |
|---|---|---|---|
| 1 | Schwenkbauteil | 13 | erste Koppel |
| 2 | Schwenklager | 14 | Gelenk |
| 3 | Karosseriestruktur | 15 | Gelenk |
| 4 | Hydraulikzylinder | 16 | zweite Koppel |
| 5 | Zylindergehäuse | 17 | Gelenk |
| 6 | Schwenkgelenk | 18 | Gelenk |
| 7 | Kolbenstange | 19 | Pfeil |
| 8 | erster Lenker | 20 | Pfeil |
| 9 | Gelenk | 21 | Pfeil |
| 10 | Schwenkgelenk | 22 | Pfeil |
| 11 | zweiter Lenker | 23 | Pfeil |
| 12 | Schwenkgelenk | 24 | Arm |

## Patentansprüche

1. Antriebsvorrichtung eines Schwenkbauteils (1) eines Fahrzeugs mit einer Antriebseinheit (4), die unter Zwischenschaltung eines Viergelenks mit dem Schwenkbauteil (1) kinematisch gekoppelt ist,
wobei ein zweites Viergelenk (12, 17, 18, 2) zwischen der Antriebseinheit (4) und dem Schwenkbauteil (1) kinematisch eingebunden ist,
**dadurch gekennzeichnet,**
**dass** das Schwenkbauteil (1) mittels eines Schwenklagers (2) an einer Karosseriestruktur (3) schwenkbar gelagert ist.

2. Antriebsvorrichtung nach Anspruch 1,
**dadurch gekennzeichnet, daß** die kinematische Kopplung einen ersten Lenker (8), der an einer Karosseriestruktur (3) schwenkbar gelagert und von der Antriebseinheit (4) verstellbar ist, und einen zweiten Lenker (11) aufweist, der über eine erste Koppel (13) mit dem ersten Lenker (8) und über eine zweite Koppel (16) mit dem Schwenkbauteil (1) gekoppelt ist.

3. Antriebsvorrichtung nach Anspruch 2,
**dadurch gekennzeichnet, daß** in zumindest einer der beiden Bewegungsendstellungen der Antriebsvorrichtung der erste Lenker (8) und/oder der zweite Lenker (11) mit der angrenzenden zweiten bzw. ersten Koppel (16 und 13) in einer Strecklage angeordnet ist bzw. sind, in der eine Schwenkbewegung des ersten bzw. zweiten Lenkers (8 bzw. 11) eine minimale Stellbewegung des Schwenkbauteils (1) bei maximaler Stellkraft erzeugt.

4. Antriebsvorrichtung nach Anspruch 2 oder 3,
**dadurch gekennzeichnet, daß** in einer Bewegungszwischenstellung der Antriebsvorrichtung der erste Lenker (8) und/oder der zweite Lenker (11) mit der jeweils angrenzenden zweiten bzw. ersten Koppel (16 und 13) in einer Stellung angeordnet ist bzw. sind, in der eine Bewegung der Antriebseinheit (4) eine maximale Stellbewegung des Schwenkbauteils (1) erzeugt.

5. Antriebsvorrichtung nach einem der Ansprüche 1 bis 4,
**dadurch gekennzeichnet, daß** das erste Viergelenk und/oder das zweite Viergelenk als Mehrgelenk mit mehr als vier Gelenken gebildet ist bzw. sind.

6. Antriebsvorrichtung nach einem der Ansprüche 1 bis 5,
**dadurch gekennzeichnet, daß** die beiden Vier- oder Mehrgelenke derart angeordnet und bewegbar sind, daß das Schwenkbauteil (1) um mehr als 180° verschwenkbar ist.

7. Antriebsvorrichtung nach einem Ansprüche 1 bis 6,
**dadurch gekennzeichnet, daß** die Antriebseinheit (4) eine im wesentlichen lineare Antriebsbewegung ausführt.

8. Antriebsvorrichtung nach einem Ansprüche 1 bis 7,
**dadurch gekennzeichnet, daß** die Antriebseinheit einen Hydraulikzylinder aufweist (4).

9. Antriebsvorrichtung nach einem Ansprüche 1 bis 8,
**dadurch gekennzeichnet, daß** das Schwenkbauteil (1) ein Lager- oder Antriebsteil eines Falt- oder Klappdaches, einer Kofferraumklappe, eines Verdeckkastendeckels oder einer sonstigen zu bewegenden Klappe oder auch einer Türe ist.

## Claims

1. Drive apparatus of a pivoting component (1) of a vehicle having a drive unit (4) which is coupled kinematically to the pivoting component (1) with a four-bar linkage connected in between, a second four-bar linkage (12, 17, 18, 2) being incorporated kinematically between the drive unit (4) and the pivoting component (1), **characterized in that** the pivoting component (1) is mounted pivotably on a vehicle-body structure (3) by means of a pivoting bearing (2).

2. Drive apparatus according to Claim 1, **characterized in that** the kinematic coupling has a first link (8), which is mounted pivotably on a vehicle-body structure (3) and can be adjusted by the drive unit (4), and a second link (11) which is coupled via a first coupler (13) to the first link (8) and via a second coupler (16) to the pivoting component (1).

3. Drive apparatus according to Claim 2, **characterized in that**, in at least one of the two movement end positions of the drive apparatus, the first link (8) and/or the second link (11) are/is arranged with the adjoining second and first coupler (16 and 13), respectively, in a stretched position, in which a pivoting movement of the first and/or second link (8 and/or 11) generates a minimum actuating movement of the pivoting component (1) at a maximum actuating force.

4. Drive apparatus according to Claim 2 or 3, **characterized in that**, in a movement intermediate position of the drive apparatus, the first link (8) and/or the second link (11) are/is arranged with the respectively adjoining second and first coupler (16 and 13) in a position, in which a movement of the drive unit (4) generates a maximum actuating movement of the pivoting component (1).

5. Drive apparatus according to one of Claims 1 to 4, **characterized in that** the first four-bar linkage and/or the second four-bar linkage are/is formed as a multiple-bar linkage with more than four links.

6. Drive apparatus according to one of Claims 1 to 5, **characterized in that** the two four-bar or multiple-bar linkages are arranged and can be moved in such a way that the pivoting component (1) can be pivoted by more than 180°.

7. Drive apparatus according to one of Claims 1 to 6, **characterized in that** the drive unit (4) performs a substantially linear drive movement.

8. Drive apparatus according to one of Claims 1 to 7, **characterized in that** the drive unit has a hydraulic cylinder (4).

9. Drive apparatus according to one of Claims 1 to 8, **characterized in that** the pivoting component (1) is a bearing or drive part of a convertible roof or folding top, a boot lid, a folding-top compartment lid or another hatch which is to be moved or else a door.

## Revendications

1. Dispositif d'entraînement d'un composant pivotant (1) d'un véhicule, comprenant une unité d'entraînement (4) qui est accouplée de manière cinématique au composant pivotant (1) en interposant un quadrilatère articulé,
un deuxième quadrilatère articulé (12, 17, 18, 2) étant incorporé de manière cinématique entre l'unité d'entraînement (4) et le composant pivotant (1),
**caractérisé en ce**
**que** le composant pivotant (1) est supporté de manière pivotante au moyen d'un palier pivotant (2) sur une structure de carrosserie (3).

2. Dispositif d'entraînement selon la revendication 1,
**caractérisé en ce que** l'accouplement cinématique présente un premier bras oscillant (8) qui est monté de manière à pouvoir pivoter sur une structure de carrosserie (3) et qui peut être déplacé par l'unité d'entraînement (4), et un deuxième bras oscillant (11) qui est accouplé par le biais d'une première bielle (13) au premier bras oscillant (8) et par le biais d'une deuxième bielle (16) au composant pivotant (1).

3. Dispositif d'entraînement selon la revendication 2,
**caractérisé en ce que** dans au moins l'une des deux positions d'extrémité de déplacement du dispositif d'entraînement, le premier bras oscillant (8) et/ou le deuxième bras oscillant (11) est/sont disposés avec la deuxième, respectivement première, bielle adjacente (16 et 13) dans une position étendue dans laquelle un mouvement de pivotement du premier, respectivement deuxième, bras oscillant (8, respectivement 11) produit un mouvement de réglage minimal du composant pivotant (1) pour une force de réglage maximale.

4. Dispositif d'entraînement selon la revendication 2 ou 3,
**caractérisé en ce que** dans une position intermédiaire de déplacement du dispositif d'entraînement, le premier bras oscillant (8) et/ou le deuxième bras oscillant (11) est/sont disposés avec la deuxième, respectivement première, bielle adjacente respective (16 et 13) dans une position dans laquelle un mouvement de l'unité d'entraînement (4) produit un mouvement de réglage maximal du composant pivotant (1).

5. Dispositif d'entraînement selon l'une quelconque des revendications 1 à 4,
**caractérisé en ce que** le premier quadrilatère articulé et/ou le deuxième quadrilatère articulé est/sont formés en tant qu'articulations multiples avec plus de quatre articulations.

6. Dispositif d'entraînement selon l'une quelconque des revendications 1 à 5,
**caractérisé en ce que** les deux quadrilatères articulés ou articulations multiples sont disposés et déplaçables de telle sorte que le composant pivotant (1) puisse pivoter de plus de 180°.

7. Dispositif d'entraînement selon l'une quelconque des revendications 1 à 6,
**caractérisé en ce que** l'unité d'entraînement (4) effectue un mouvement d'entraînement essentiellement linéaire.

8. Dispositif d'entraînement selon l'une quelconque des revendications 1 à 7,
**caractérisé en ce que** l'unité d'entraînement présente un vérin hydraulique (4).

9. Dispositif d'entraînement selon l'une quelconque des revendications 1 à 8,
**caractérisé en ce que** le composant pivotant (1) est une partie de support ou d'entraînement d'un toit pliant ou d'un toit ouvrant, d'un volet de coffre, d'un couvercle de capote ou d'un autre volet à déplacer ou aussi d'une porte.
